# EUROPEAN PATENT APPLICATION

(11) **EP 3 352 113 A1**
(43) Date of publication of application: **25.07.2018**
(21) Application number: 17206922.1
(22) Date of filing: 13.12.2017
(51) Int. Cl.: G06N 3/063, G06N 3/04, G06F 11/14

(54) **CALCULATION SYSTEM AND CALCULATION METHOD OF NEURAL NETWORK**

(30) Priority: 18.01.2017 JP 2017006740
(71) Applicant: Hitachi, Ltd., Chiyoda-ku Tokyo 100-8280 (JP)
(72) Inventor: ONO, Goichi, Chiyoda-ku,, Tokyo 100-8280, (JP)
(74) Representative: Addiss, John William

(57) **Abstract**

In a calculation system in which a neural network performing calculation using input data and a weight parameter is implemented in a calculation device including a calculation circuit and an internal memory and an external memory, the weight parameter is divided into two, i.e., a first weight parameter and a second weight parameter, and the first weight parameter is stored in the internal memory of the calculation device, and the second weight parameter is stored in the external memory.

## Description

### BACKGROUND OF THE INVENTION

### 1. Field of the Invention

The present invention relates to a technique for processing information highly reliably, and more particularly, to a calculation system and a calculation method of a neural network.

### 2. Description of the Related Art

In recent years, it has been found that a high recognition rate can be achieved by using deep neural network (DNN) for image recognition, and the deep neural attracts attention (see, for example, JP-2013-69132-A). The image recognition is processing that classifies and identifies the type of objects in an image. The DNN is a machine learning technique which can achieve a high recognition rate by performing feature quantity extraction in multiple layers by connecting perceptron which extracts feature quantity of input information.

The performance improvement of computers can be considered to be a background as to why the DNN has been found to be particularly effective among machine learning algorithms. In order to achieve a high recognition rate in the DNN, it is necessary to train and optimize the parameter data (hereinafter simply referred to as "parameters") of the perceptron of the intermediate layer by using thousands or tens of thousands of pieces of image data. As the number of pieces of data of parameter increases, more detailed classification of images and a high recognition rate can be achieved. Therefore, a higher computing performance is required in order to train a large amount of parameters by using a large amount of images, and general image recognition with the DNN has been realized with the development of computers such as multicore technology in servers and GPGPU (General-purpose computing on graphics processing units) in recent years.

With the wide recognition of the effectiveness of the DNN, the research of the DNN has spread explosively and various applications are being studied. In one example, it is considered to use the DNN to recognize surrounding objects in the development of automatic driving techniques for automobiles.

### SUMMARY OF THE INVENTION

The current DNN algorithm requires large memory and calculation load for storing parameters necessary for processing, and consumes a high power. In this regard, for built-in applications such as automobiles, there are restrictions on resources and processing performance compared to server environments.

Therefore, the inventors considered a combination of FPGA (Field-Programmable Gate Array) having a high computation efficiency per power and an external memory such as a DRAM (Dynamic Random Access Memory) on mounting in a general-purpose small device for automotive applications.

On the other hand, in order to speed up processing (parallelization) and achieve lower power consumption, it is effective to reduce the external memory usage rate and use the internal memory. Therefore, the inventors also considered making effective use of a CRAM (Configuration Random Access Memory) and the like which is the internal memory of the FPGA. However, a memory having lower resistance to soft error, for example, an SRAM (Static Random Access Memory) is used for the CRAM constituting the logic of the FPGA, and the soft error occurred at that point changes the operation of the device itself, and thus it is necessary to take measures for the soft error.

As for the countermeasure against the CRAM soft error, it may be possible to detect the soft error by cyclically monitoring the memory and comparing it with the configuration data stored in the external memory. However, a predetermined period of time (for example, 50 ms or more) is required for error detection, and erroneous processing may be performed until error detection and correction are completed.

Therefore, it is an object of the present invention to enable information processing with a high degree of reliability using DNN, and to provide an information processing technique capable of achieving a higher speed and a lower power consumption.

One aspect of the present invention is a calculation system in which a neural network performing calculation using input data and a weight parameter is implemented in a calculation device including a calculation circuit and an internal memory and an external memory, in which the weight parameter is divided into two, i.e., a first weight parameter and a second weight parameter, the first weight parameter is stored in the internal memory of the calculation device, and the second weight parameter is stored in the external memory.

Another aspect of the present invention is a calculation system including an input unit receiving data, a calculation circuit constituting a neural network performing processing on the data, a storage area storing configuration data for setting the calculation circuit, and an output unit for outputting a result of the processing, in which the neural network contains an intermediate layer that performs processing including inner product calculation, and a portion of a weight parameter for the calculation of the inner product is stored in the storage area.

Another aspect of the present invention is a calculation method of a neural network, in which the neural network is implemented on a calculation system including a calculation device including a calculation circuit and an internal memory, an external memory, and a bus connecting the calculation device and the external memory, and the calculation method of the neural network performs calculation using input data and a weight parameter with the neural network. In this case, the calculation method of the neural network includes storing a first weight parameter, which is a part of the weight parameter, to the internal memory, storing a second weight parameter, which is a part of the weight parameter, to the external memory, reading the first weight parameter from the internal memory and reading the second weight parameter from the external memory when the calculation is performed, and preparing the weight parameter required for the calculation in the calculation device and performing the calculation.

According to the present invention, it is possible to process information with a high degree of reliability using DNN, and to provide an information processing technique capable of achieving a higher speed and a lower power consumption. The problems, configurations, and effects other than those described above will become apparent from the following description of the embodiments.

### BRIEF DESCRIPTION OF THE DRAWINGS

Fig. 1 is a block diagram illustrating a configuration example of an image recognition device according to an embodiment;
Fig. 2 is a conceptual diagram illustrating the concept of DNN processing;
Fig. 3 is a schematic diagram illustrating calculation processing of nodes of each layer;
Fig. 4 is a schematic diagram illustrating an implementation example of DNN to an image recognition device, along with the flow of data;
Fig. 5 is a graph illustrating an example of distribution of weight data W;
Figs. 6A and 6B are conceptual diagrams illustrating an example of an allocation method for allocating weight data W0 close to 0 to the memory;
Figs. 7A and 7B are conceptual diagrams illustrating an example of an allocation method for allocating weight data W1 far from 0 to the memory;
Fig. 8 is a block diagram illustrating a configuration example of readout of data to a convolution calculation and full connection calculation module;
Fig. 9 is a block diagram illustrating another configuration example of readout of data to the convolution calculation and full connection calculation module;
Fig. 10 is a flow diagram illustrating the procedure to store weight data and the like to each memory;
Fig. 11 is a table illustrating an example of an allocation table of weight data to an internal memory and an external memory;
Fig. 12 is a table illustrating an example of a storage address table of weight data to an internal memory and an external memory;
Fig. 13 is a flow diagram illustrating the processing of the image recognition device according to the embodiment;
Fig. 14 is a flow diagram illustrating the processing of the convolution calculation according to the embodiment;
Fig. 15 is a conceptual diagram illustrating a storage form of weight data in the external memory and the internal memory;
Fig. 16 is a block diagram illustrating a configuration example of a calculation unit; and
Fig. 17 is a flow diagram illustrating an example of storage processing of weight data to the calculation unit.

### DESCRIPTION OF THE PREFERRED EMBODIMENTS

Embodiments will be described with reference to the drawings. In all the drawings explaining the embodiments, the same reference numerals are given to the constituent elements having the same functions, and the repetitive description will be omitted unless it is particularly necessary.

When an example of the embodiments described below is given, a neural network calculating by using input data and a weight parameter is implemented in a calculation device of an FPGA and the like including a calculation circuit and a memory therein and an external memory, in which a weight parameter is divided into first and second weight parameters, the first weight parameter is stored in a memory provided in the inside of a calculation device such as a CRAM and the like, and the second weight parameter is stored to an external memory such as a DRAM and a flash memory.

More specifically, in the present embodiment, the parameter set of weight used for DNN calculation is divided into two as follows. The first weight parameter is a parameter having a low contribution to the calculation result of DNN. For example, the value is a weight close to 0 or a bit indicating the lower digit of the weight. On the other hand, the second weight parameter is a parameter having a high contribution to the calculation result of DNN. This can be defined as at least a part of a parameter other than the first weight parameter. Then, the first weight parameter is stored in the internal memory (CRAM) and the second weight parameter in the external memory (DRAM), and DNN calculation is executed.

In the embodiment described below, the DNN for processing an image is described, but the application is not limited to the image recognition device.

### First embodiment

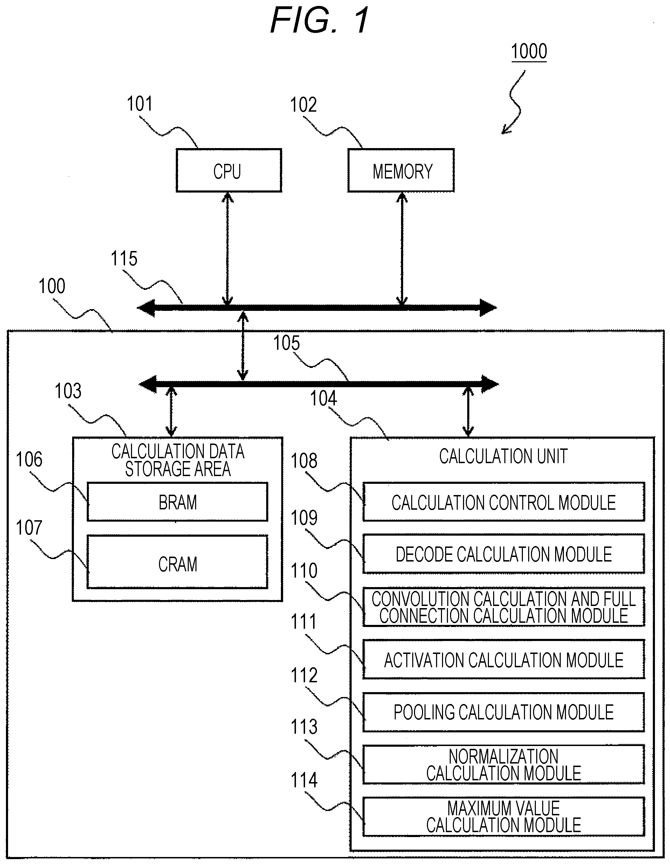

Fig. 1 illustrates a configuration of an image recognition device 1000 according to the present embodiment. The image recognition device 1000 is configured as, for example, a device mounted on an automobile, and is supplied with an electric power from a battery (not shown) or the like. The image recognition device 1000 includes a CPU (Central Processing Unit) 101 that performs general-purpose processing, an accelerator 100, and a memory 102 (also referred to as an "external memory 102" for the sake of convenience) for storing data. These are connected by an external bus 115, so that data can be exchanged. For the external memory 102, for example, a semiconductor memory such as DRAM or a flash memory composed of one or a plurality of chips can be used.

The accelerator 100 is a device dedicated for processing image data, and the input data is image data sent from the CPU 101. More specifically, when a necessity of image data processing occurs, the CPU 101 sends the image data to the accelerator 100, and receives the processing result from the accelerator 100.

The accelerator 100 has a calculation data storage area 103 (which may be referred to as an "internal memory 103" for the sake of convenience) and a calculation unit 104 in the inside. An input port and an output port (not shown), the calculation data storage area 103 and the calculation unit 104 are connected by a bus 105 (which may be referred to as an "internal bus 105" for the sake of convenience), and the calculation data is transferred via the bus 105.

In Fig. 1, the accelerator 100 is assumed to be composed of one chip FPGA. In built-in applications such as automobiles, the accelerator 100 can be composed of a semiconductor integrated circuit such as an FPGA. This semiconductor integrated circuit is composed of, for example, one chip, and cooperates with the general-purpose CPU 101, and mainly performs processing related to image. The calculation data storage area 103 is a semiconductor memory. For example, a small scale and high speed memory such as an SRAM is used for calculation data storage area 103. In the present embodiment, image recognition processing is described as an example, but the present embodiment can also be used for other processing, and does not particularly restrict the application. Further, the external memory 102 is a memory such as a DRAM or a flash memory, and the external memory 102 is assumed to be superior to the calculation data storage area 103 which is the internal memory in a soft error resistance.

The calculation data storage area 103 includes a BRAM (Block RAM) 106 used as a temporary storage area and a CRAM 107. The BRAM 106 stores an intermediate result of the calculation executed by the accelerator 100. The CRAM 107 stores configuration data for setting each module of the calculation unit 104. As will be described later, the BRAM and the CRAM also stores the parameter (weight data) of the intermediate layer of the DNN.

The calculation unit 104 contains the modules necessary for the calculation of the DNN. Each module included in calculation unit is programmable by the function of FPGA. However, it is also possible to configure a part of module with a fixed logic circuit.

In a case where the accelerator 100 is constituted by FPGA, the calculation unit 104 can be composed of programmable logic cells. The data for the program, such as the contents of lookup table and data for setting switches of the modules 108 to 114 of the calculation unit 104, is loaded from the external memory 102 to the CRAM 107 of the calculation data storage area 103 by the control of the CPU 101, and the logic cell is set so as to realize the functions of the modules 108 to 114.

The calculation control module 108 is a module that controls the flows of other calculation modules and calculation data according to the algorithm of DNN.

The decode calculation module 109 is a module that decodes the parameter stored in the external memory 102 and the internal memory 103. The decode calculation module 109 will be explained in detail later.

The convolution calculation and full connection calculation module 110 is a module that executes the convolution calculation or the full connection calculation in the DNN. Since the contents of convolution calculation and full connection calculation are both inner product calculation, the convolution calculation and full connection calculation can be executed with one module. Even if there are multiple convolution layers and full connection layers, the convolution calculation and full connection calculation can be executed with one convolution calculation and full connection calculation module 110.

The activation calculation module 111 is a module that executes the calculation of the activation layer of the DNN.

The pooling calculation module 112 is a module that executes the calculation of the pooling layer in the DNN.

The normalization calculation module 113 is a module that executes the calculation of the normalization layer in the DNN.

The maximum value calculation module 114 is a module for detecting the maximum value of the output layer in the DNN and obtaining the recognition result 202. The modules deeply related to the contents of the present embodiment among these calculation modules are the decode calculation module 109 and the convolution calculation and full connection calculation module 110. These two modules will be described in detail later. The configuration of which explanation is omitted in the present embodiment may be based on known FPGA or DNN techniques.

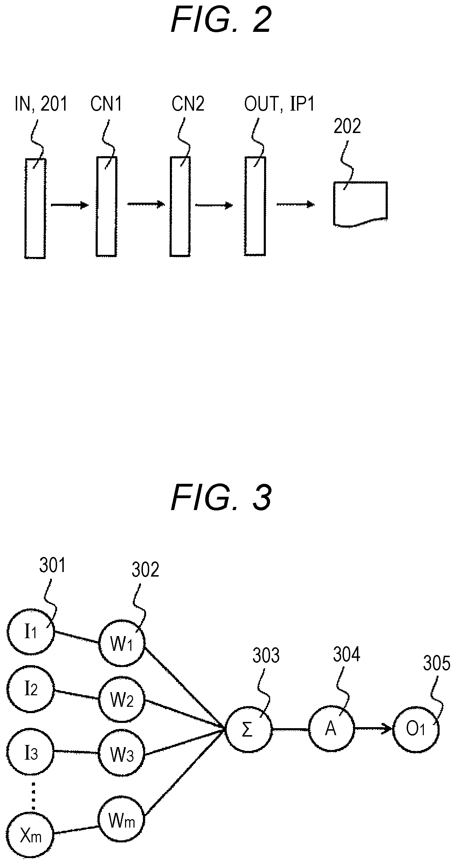

Fig. 2 illustrates a concept of processing of DNN according to the embodiment. The DNN of this example is assumed to have an input layer IN, a first convolution layer CN1, a second convolution layer CN2, and an output layer OUT. The number of layers can be arbitrarily changed. The input layer IN is made by normalizing the image data 201. The output layer OUT is defined as the first full connection layer IP1. Normally, each convolution layer has a pooling layer and activation layer as a set, but it is omitted here. The image data 201 is input into the DNN, and the recognition result 202 is output.

The convolution layers CN1 and CN2 extract the information (feature quantity) required for recognition from the input image data 201. For convolution processing required for extracting feature quantity, the convolution layer uses a parameter. The pooling layer summarizes the information obtained with the convolution layer and, when data is an image, the invariance with respect to the position is increased.

The full connection layer IP1 uses the extracted feature quantity to determine which category the image belongs to, i.e., performs the pattern classification.

Each layer constitutes one layer of multi-layer perceptron. Conceptually, it can be considered that a plurality of nodes are arranged in a row in one layer. One node is associated with all nodes in the upstream layer. For each connection, weight data W (also referred to as a "weight parameter") is allocated as a parameter. The input into the node of the downstream layer is based on the inner product of the input of the upstream layer and the weight data. Other bias data and threshold value data may be used for calculation. In the present specification, these are collectively referred to as parameters. In the present embodiment, characteristic processing is performed when storing the parameters of each layer constituting the neural network in the memory.

Fig. 3 is a diagram schematically illustrating calculation of nodes of each layer such as the convolution layers CN1, CN2 and the full connection layer IP1 of Fig. 2. A predetermined weight data W302 is added to input 1301 from multiple nodes of the upstream layer. There may be an activation function 304 that gives a predetermined threshold value and bias to sum 303. The weight data W302 strengthens or attenuates the input information for the input 301. With such a method, importance of input information is allocated in the task learned by the algorithm. Next, the sum 303 of inputs in which weights are connected passes through the activation function 304 of the node. As a result, the classification work such as whether the signal proceeds in the net, if so, how much it progresses, and whether the signal affects the final result, is performed, which becomes an input O305 into one node of the next layer.

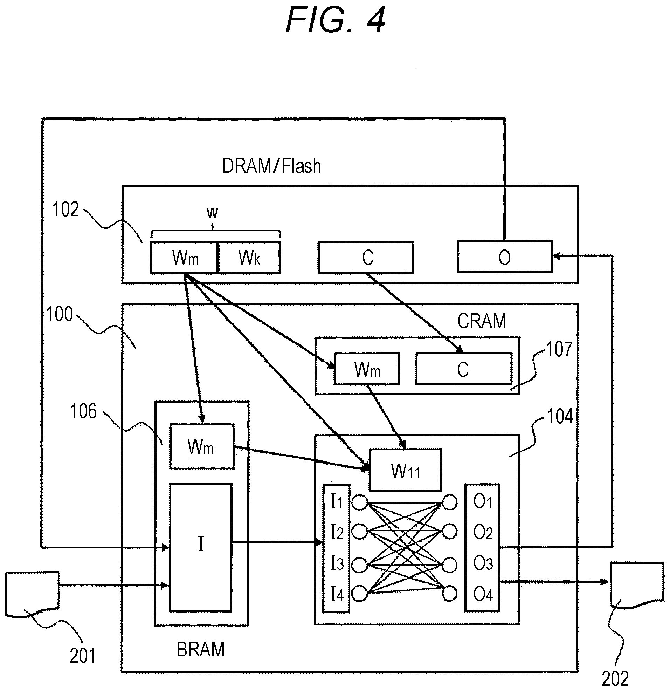

Fig. 4 is a diagram illustrating the concept of implementing the DNN shown in Fig. 2 and Fig. 3 in an image recognition device 1000 shown in Fig. 1, with the flow of the data. As outlined in Fig. 1, the accelerator 100 can be configured with one chip of generally-available FPGA. The calculation unit 104 of FPGA can program logic and can implement various logic circuits.

The program of the calculation unit 104 is performed by the configuration data C stored in the CRAM 107. Since the CRAM 107 is composed of an SRAM, the configuration data C is loaded from the external memory 102 or the like into the CRAM 107 by the control of the CPU 101 at the time of power-on or the like. In Fig. 4, for the sake of simplicity, the convolution calculation and full connection calculation module 110 is schematically shown as the logic of the calculation unit 104. Although not shown in Fig. 4, other calculation modules can be similarly programmed and constitute a part of the calculation unit 104.

As explained in Fig. 2 and Fig. 3, the convolution layers CN1, CN2, the full connection IP1, and the like basically perform sum-of-products calculation, i.e., addition of multiplication results. In this calculation, as described in Fig. 2 and Fig. 3, parameters such as weight data W are used. In the present embodiment, all of the weight data W are stored in the external memory 102. At least a part Wm of the weight data W is loaded into the BRAM 106 or the CRAM 107 before calculation, e.g. at the time of power-on or the like. More specifically, in the present embodiment, the weight data is distributed to the external memory 102 and the calculation data storage area 103 according to a predetermined rule.

As this rule, the weight data Wm having a low contribution to the calculation result is stored in the BRAM 106 or the CRAM 107 of the calculation data storage area 103 having a low soft error resistance. The weight data Wk having a high contribution to the calculation result is not stored in the calculation data storage area 103 having a low soft error resistance. By storing the weight data Wm having a low contribution to the calculation result in the calculation data storage area 103 which is an internal memory and using the weight data Wm for calculation, there is an effect of high speed processing and low power consumption. In addition, the adverse effect of the soft error on the calculation result can be reduced by using the weight data Wk having a high contribution to the calculation result and held in the external memory 102 having a high soft error resistance for the calculation.

When the image recognition device 1000 performs image recognition, the image data 201 is held in the BRAM 106 as input data I and calculation is performed with the logic module of calculation unit 104. When the convolution calculation and full connection calculation module 110 is adopted as an example, the parameters required for the calculation are read from the external memory 102 or the calculation data storage area 103 to the calculation unit 104 and calculation is performed. In the case of the inner product calculation, as many pieces of weight data W as the number of the products of input side node I and output side node O are required. In Fig. 4, weight data W₁₁ of the input I1 for the output O1 is shown. The output data O which is the calculation result is stored in the external memory 102, and this data is stored in the BRAM 106 as the input data I of the subsequent calculation. When all the necessary calculations are completed, the final output O from the calculation unit 104 is outputted as the recognition result 202.

The convolution layers CN1, CN2, the full connection layer IP1, and the like perform the sum-of-products calculation (inner product calculation), and therefore, if the convolution calculation and full connection calculation module 110 is programmed in accordance with the largest row and column, one convolution calculation and full connection calculation module 110 can be commonly used for calculation of each layer by changing the parameter. In this case, the amount of data of the configuration data C can be small. However, the amount of the weight data W increases as the number of layers and nodes increases. In Fig. 4 and the following description, it is assumed that the convolution calculation and full connection calculation module 110 is commonly used, but it is also possible to prepare the convolution calculation and full connection calculation module 110 for each layer individually.

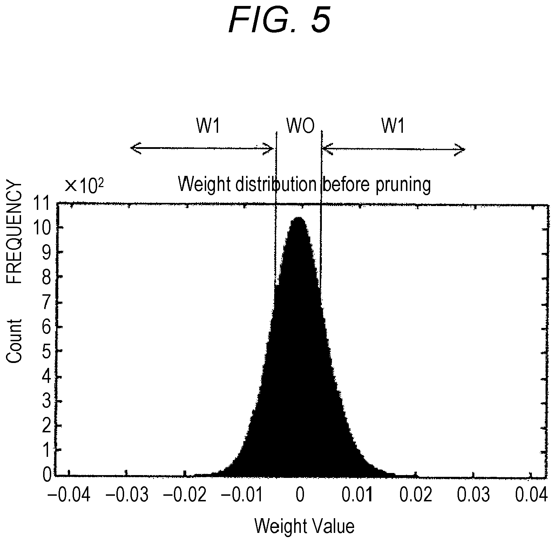

Fig. 5 illustrates an example of distribution of weight data W. The horizontal axis represents numeric values of the weight data W, and the vertical axis represents the appearance frequency. In this example, since the frequency of the weight data W0 close to 0 is large, the total amount of data of W0 is large. Since the frequency of the weight data W1 far from 0 (for example, an absolute value of 0.005 or more) is small, the total data amount of W1 is small. In this case, in the weight data W0 close to 0, the result of the product is close to 0, and thus it is considered that the adverse effect on the final calculation result of DNN is small. More specifically, even if the value of the weight data W0 close to 0 changes due to the soft error, the adverse effect on the calculation result is small. Therefore, as shown in Fig. 5, if the weight data W0 close to 0 is set as the weight data Wm which is stored in the calculation data storage area 103 having a low soft error resistance, it can be said that the adverse effect on the calculation result is small. On the other hand, the weight data W1 far from 0 is not stored in the calculation data storage area 103 but is stored as the weight data Wk in the external memory 102.

However, when the weight data W0 close to 0 changes to the weight data far from 0 due to soft error, the adverse effect on calculation result becomes large. Therefore, it is desirable to limit the weight data Wm stored in the calculation data storage area 103 to bits representing lower digits of weight.

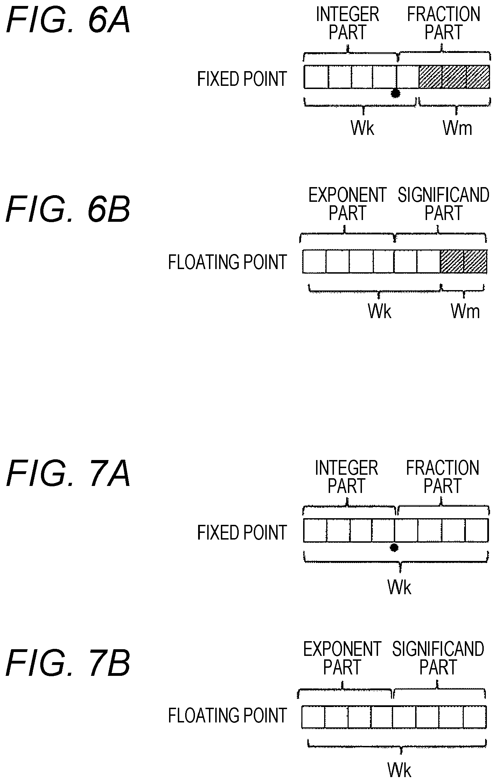

Figs. 6A and 6B are diagrams conceptually illustrating a method of allocating the weight data W0 close to 0 to the memory. Fig. 6A shows a case of fixed-point calculation and Fig. 6B shows a case of floating point calculation. In both cases, a predetermined number of bits from the lower bit indicated by hatching is set as the weight data Wm stored in the calculation data storage area 103, and the remaining part is set as the weight data Wk stored in the external memory 102.

Figs. 7A and 7B are conceptual diagrams illustrating the allocation method to the memory of weight data W1 far from 0. Fig. 7A shows a case of fixed-point calculation and Fig. 7B shows a case of floating point calculation. In both cases, it is assumed that weight data Wk stores all data in the external memory 102.

How to divide weight data into W1 and W0 and how to divide W0 into Wm and Wk basically depend on the soft error resistance of device and the content of calculation, but basically they depend on the magnitude of the weight data and the digit of the bit. For example, a value of plus or minus 0.005 is set as a threshold value, and a parameter with a value equal to or less than 0.005 can be approximated to zero and can be treated as weight data W0 close to 0. For example, three lower bits are set as the weight data Wm stored in the calculation data storage area 103. The remaining part is set as the weight data Wk stored in the external memory 102.

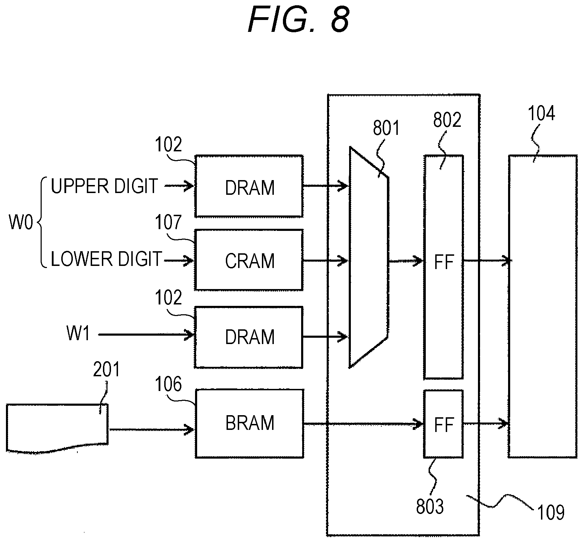

FIG. 8 is a block diagram showing a reading configuration of data to the convolution calculation and full connection calculation module 110. The image data 201 which is input is stored in the BRAM 106 of the calculation data storage area 103. The intermediate data which is being calculated is also stored in the BRAM 106. The weight data W0 close to 0 uses the higher digit stored in the DRAM of the external memory 102. The lower digit of the weight data W0 close to 0 stored in the CRAM 107 is used. The weight data W1 far from 0 stored in the DRAM of the external memory 102 is used.

The decode calculation module 109 selects the weight data stored in the external memory 102 and the calculation data storage area 103 with a selector 801, controls the timing with a flip flop 802, and sends it to the calculation unit 104. The image data 201 and the intermediate data are also sent to the calculation unit 104 by controlling timing with a flip flop 803.

In the example of Fig. 8, the lower digit of the weight data W0 close to 0 is stored in the CRAM 107, but the lower digit can also be stored in the BRAM 106 depending on the size of the BRAM 106 and the size of the image data 201 and the intermediate data.

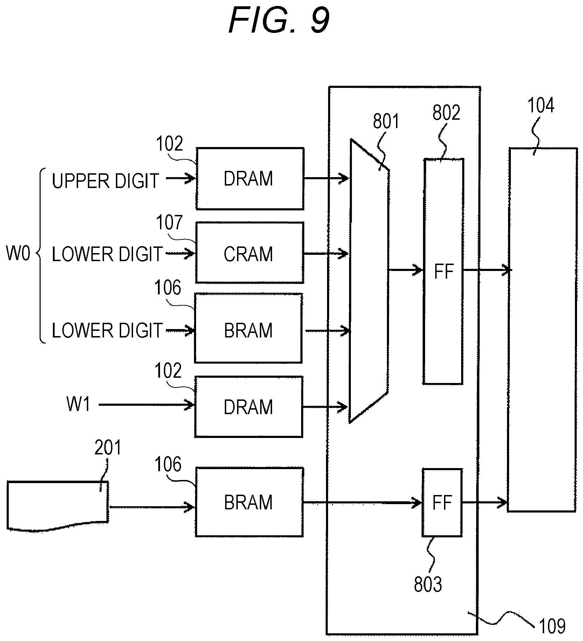

Fig. 9 is an example of storing upper digits of weight data W0 close to 0 in the DRAM of the external memory 102 and storing lower digits thereof in the BRAM 106 and the CRAM 107.

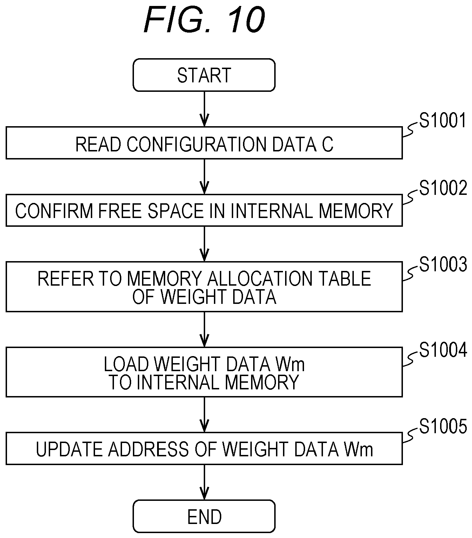

Fig. 10 is a flow diagram showing the procedure of storing the configuration data C and weight data W in each memory in the configurations of Fig. 4 and Fig. 8. This processing is performed under the control of the CPU 101. First, in the processing S1001, the configuration data C is loaded from the external memory 102 to the CRAM 107 in the same manner as the usual processing of the FPGA, and in the processing S1002, the remaining free area of the CRAM 107 is secured.

Next, in the processing of S1003, reference is made to the allocation table of the weight data W to the external memory 102 and the internal memory 103. The allocation table is stored in the DRAM of the external memory 102 in advance, for example.

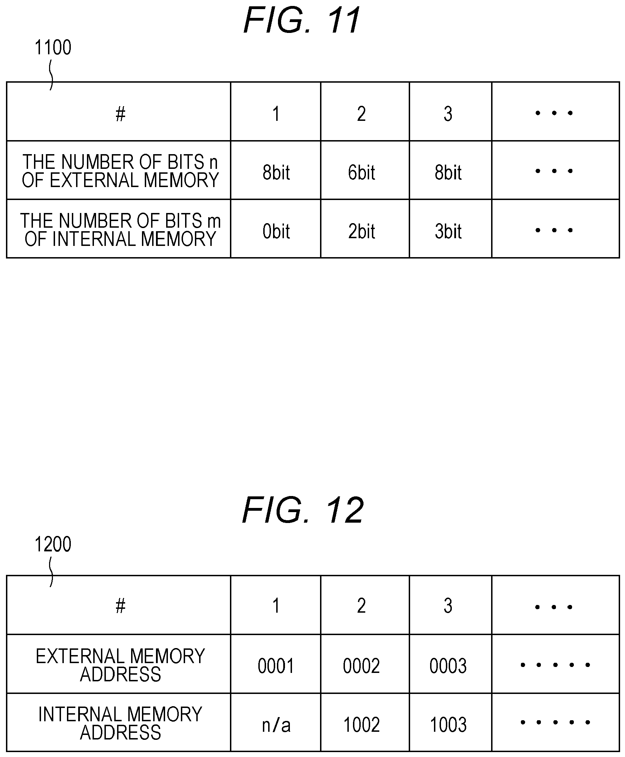

Fig. 11 is a table showing an example of an allocation table 1100 of allocation of the weight data W to the external memory 102 and the internal memory 103. Here, Fig. 11 shows how many bits are allocated to the weight data W to the external memory 102 and the internal memory 103 for each parameter of any given one layer (or one filter). Normally, the parameter of the DNN is optimized and determined by learning of the DNN. Therefore, for the learned parameters, n bits of weight data W is allocated to the external memory and m bits weight data W is allocated to the internal memory according to the method shown in Figs. 6A to 7B. The data may be created manually or each parameter may be processed by a simple program. As described above, since all the weight data W are stored in the external memory, the allocated number of bits n of the external memory mentioned above is a number of bits read out at the time of calculation among the stored weight data.

In the processing of S1004, referring to the allocation table 1100, a predetermined number of bits of weight data Wm are loaded from the external memory 102 to the internal memory 103. For example, for the parameter #2 in Fig. 11, the lower 2 bits are loaded into the internal memory 103. For the parameter of #3, the lower 3 bits are loaded into the internal memory 103. For parameter #1, there is no data to load into internal memory 103.

In the processing in S1005, an address table 1200 indicating the storage location of the weight data Wk stored in the external memory 102 and the weight data Wm loaded in the internal memory 103 is created, and the address table 1200 is stored in the CRAM 107 or the BRAM 106.

Fig. 12 shows an example of the address table 1200. For example, for each of the external memory 102 and the internal memory 103, the head address is designated for each parameter of each layer (or one filter thereof). Since the head address of the external memory 102 is the same as when the parameters are stored in the DRAM in advance, the head address of the weight data Wm stored in the internal memory 103 is added.

The preparation of data necessary for calculation of the calculation unit 104 is completed prior to the image processing of the image recognition device 1000.

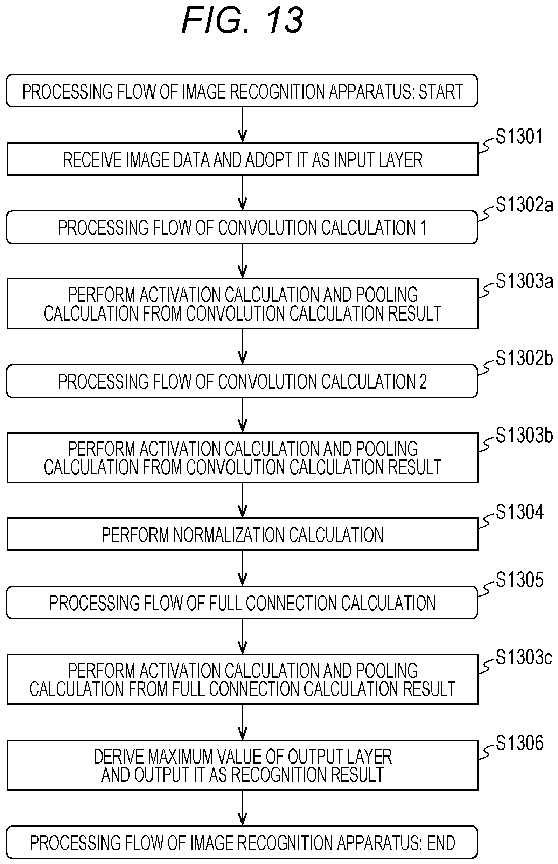

Fig. 13 is a flowchart showing the image processing procedure of the image recognition device 1000 according to the present embodiment. Two convolution calculations and one full connection calculation are shown by using the DNN of Fig. 2 as an example.

Step S1301: The accelerator 100 of the image recognition device 1000 receives the image 101 which is input data from the CPU 101 and stores the image 101 in the BRAM 106 in the calculation data storage area 103. The image data corresponds to the input layer IN in the DNN.

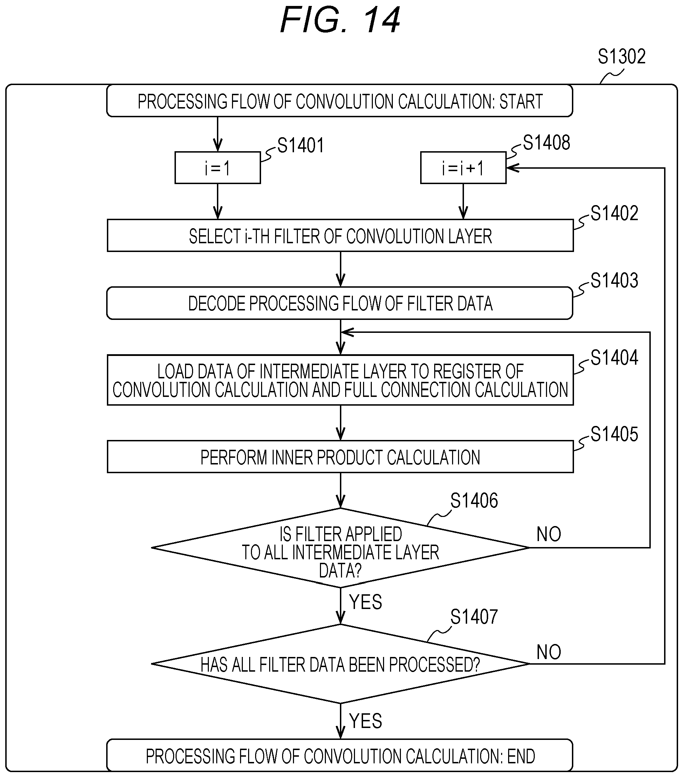

Step S1302: The feature quantity extraction is performed with the parameter using convolution calculation and full connection calculation module 110. This corresponds to the convolution layers CN1, CN2 in the DNN. The details will be explained later with reference to Fig. 14

Step S1303: The activation calculation module 111 and the pooling calculation module 112 are applied to the result of the convolution calculation and the result of full connection calculation which are contained in the BRAM 106 in the calculation data storage area 103. The calculation equivalent to the activation layer and the pooling layer in the DNN is executed.

Step S1304: The normalization calculation module 113 is applied to the intermediate layer data stored in the BRAM 106 in the calculation data storage area 103. The calculation equivalent to normalization layer in the DNN is executed.

Step S1305: The feature quantity extraction is performed with the parameter using convolution calculation and full connection calculation module 110. It corresponds to the full connection layer IP1 in the DNN. Details will be explained later.

Step S1306: The index of the element having the maximum value in output layer is derived and output as the recognition result 202.

Fig. 14 shows the details of processing flow S1302 of the convolution calculation according to the present embodiment. The processing of the convolution calculation includes the processing to read the weight parameter and the processing to perform the inner product calculation of the data and the weight parameters of input or intermediate layer.

Step S1401: The loop variable is initialized as i = 1.

Step S1402: The i-th filter of the convolution layer is selected. Here, multiple pieces of weight data W for multiple inputs connected to one node in the downstream stage is referred to as a filter.

Step S1403: The parameter is decoded. More specifically, the parameter is loaded into the input register of the convolution calculation and full connection calculation module 110. The details will be explained later.

Step S1404: The data of the intermediate layer stored in the BRAM 106 in the inside of the calculation data storage area 103 is loaded into the input register of the convolution calculation and full connection calculation module 110 as input data.

Step S1405: The inner product calculation is performed by using the convolution calculation and full connection calculation module 110. The output data stored in the output register is temporarily stored in the BRAM 106 in the inside of the calculation data storage area 103 as an intermediate result of calculation.

Step S1406: If the filter has been applied to all input data, the flow proceeds to step S1407. Otherwise, the target intermediate layer data to which filter is applied is changed, and step S1404 is subsequently performed.

Step S1407: When processing of all the filters is completed, the processing flow of the convolution calculation is terminated. The final output of the layer is transferred to the external memory 102, and the data is transferred to the BRAM 106 and becomes the input of the subsequent layer. If there is an unprocessed filter, the process proceeds to step S1408.

Step S1408: The loop variable is updated as i = i+1 and the subsequent filter is processed.

With the above processing, the processing flow S1302 for one convolution layer is performed. Although there are some differences, the calculation of the inner product while changing the parameters is performed for the processing flow S1305 of the full connection layer in the same manner, and it can be processed in the same way as in Fig. 14.

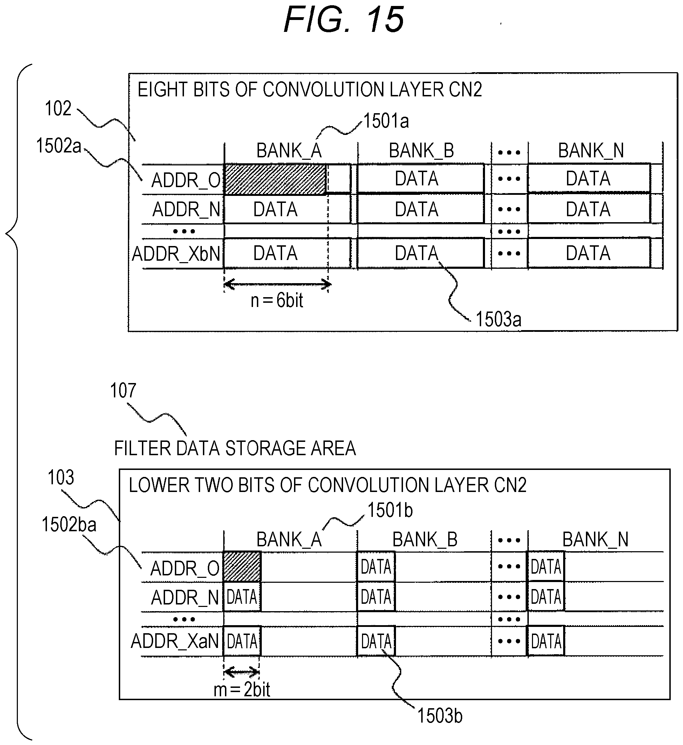

Fig. 15 illustrates an example of storage of parameters according to the present embodiment. The parameter of the convolution layer CN2 in Fig. 11 is explained as an example. One parameter of the convolution layer CN2 is 8 bits, and all the 8 bits are stored in the external memory 102. According to the processing in S1004 in Fig. 10, the lower 2 bits of the 8 bits are stored in the internal memory 103. In the figure, for the sake of simplicity, all the lower 2 bits of each parameter are stored in the internal memory, but different numbers of bits may be loaded into the internal memory for each parameter.

The storage areas of the external memory 102 and the internal memory 103 are divided by banks 1501 and the address number is assigned by an address 1502. The configuration of these banks 1501 and how to assign the address 1502 depends on the physical configuration of the memory, but here it is assumed that the configuration and how to assign are common in the external memory 102 and the internal memory 103, and one parameter is stored for each address.

In the external memory 102, 8 bits of data 1503a are stored in one address, but the upper 6 bits indicated by hatching are decoded. In the internal memory 103, 2 bits of data 1503b are stored at the address, and all the 2 bits indicated by the hatching are decoded.

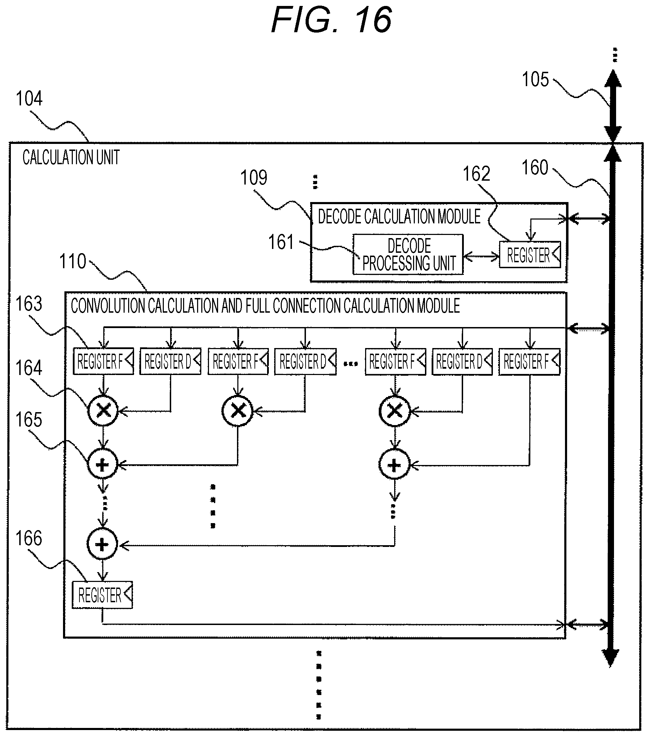

Fig. 16 shows the configuration of the decode calculation module 109 and the convolution calculation and full connection calculation module 110 in the inside of the calculation unit 104 according to the present embodiment. The calculation unit 104 may include multiple convolution calculation and full connection calculation modules 110. There is also a bus 160 that interconnects the calculation modules, and each calculation module is used to exchange calculation data. The bus in the calculation unit 104 is connected to the internal bus 105 of the accelerator 100 and the internal bus 105 is connected to the external bus 115 so that the calculation data can be exchanged with the BRAM 106 and the external memory 102. The convolution calculation and full connection calculation module 110 can use one module as a different intermediate layer by changing the data stored in the input register 163 and changing the parameter. However, multiple convolution calculation and full connection calculation module 110 may be provided.

The decode calculation module 109 has a register 162 for temporarily saving parameters and a decode processing unit 161 for decoding filter data in the inside. The convolution calculation and full connection calculation module 110 is a calculation module that executes inner product calculation, and has an input register 163, a multiplier 164, an adder 165, and an output register 166. There are an odd number of (2N+1) input registers 163 in total, and includes a register F holding parameter and a register D holding a calculation result of the upstream layer. The input register 163 is connected to the bus 160 in the inside of the calculation unit 104, receives input data from the bus 160, and holds the input data. All of these input registers 163 are connected to the input of the multiplier 164 except for one, and the remaining one is connected to the input of the adder 165. Half of the 2N input registers 163 connected to the input of multiplier 164, i.e., N+1 registers F, receive and hold the parameter of the intermediate layer, and the remaining half, i.e., N registers D, receive and hold the calculation intermediate result saved in the BRAM 106 in the internal memory 103.

The convolution calculation and full connection calculation module 110 has N multipliers and adder. The N multipliers each calculate the product of the parameter and the calculation intermediate result and output it. The N adders calculate the sum of N multiplier results and one input register, and the result thereof is saved in the output register 166. The calculation data saved in the output register 166 is transferred to the external memory 102 or the calculation module through the bus 160 in the inside of the calculation unit 104.

Explanation will be given by taking as an example the case of decoding the parameter 1503 of the convolution layer CN2 shown in Fig. 15. First, the decode processing unit 161 in the inside of the calculation unit 104 gives an instruction to transfer, to the register 162 in the inside of the decode calculation module 109, the upper 6-bit parameter among the 8 bits stored in address ADDR 0 of BANK A of the external memory 102, based on the data shown in Figs. 11 and 12.

Next, the decode processing unit 161 in the inside of the calculation unit 104 gives an instruction to transfer, to the register 162 in the inside of the decode calculation module 109, the 2-bit parameter stored in the address ADDR 0 of BANK A of the internal memory 103, based on the data shown in Figs. 11 and 12. As a result, the 6-bit and 2-bit data stored in the corresponding addresses of the external memory 102 and the internal memory 103 are transferred to the register 162 of the decode calculation module.

Next, the decode processing unit 161 in the inside of the calculation unit 104 transfers the parameter stored in the register 162 to the register F of the convolution calculation and full connection calculation module via the bus 160.

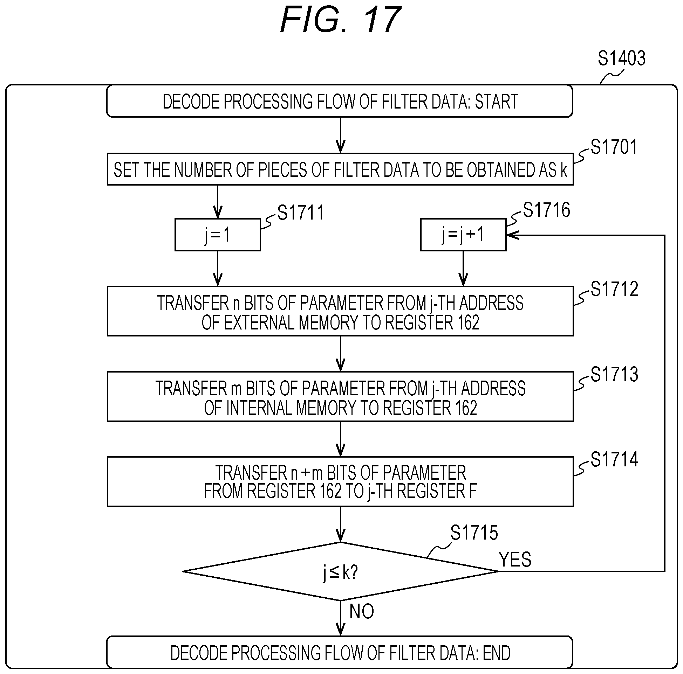

Fig. 17 shows the decode processing flow S1403 of the parameter according to the present embodiment.

Step S1701: The number of parameters of the corresponding filter is referred to, and it is set as k. The number of corresponding parameters stored in one address shall be one.

Step S1711: The loop variable j is initialized as j = 1.

Step S1712: The calculation control module 108 transfers the n bits of parameter stored in the j-th address of the address of the external memory 102 to the register 162 in the inside of the decode calculation module 109 through the internal bus 105 of the accelerator 100 and the bus 160 in the inside of the calculation unit 104.

Step S1713: The calculation control module 108 transfers the m bits of parameter stored in the j-th address of the address of the internal memory 103 to the register 162 in the inside of the decode calculation module 109 through the internal bus 105 of the accelerator 100 and the bus 160 in the inside of the calculation unit 104.

Step S1714: The calculation control module 108 transfers the (n+m)-bit parameter stored in the register 162 to the j-th register F.

Step S1715: If j ≤ k is satisfied, step S1706 is subsequently performed, and if not, the decode processing flow of the parameter is terminated.

Thus, the decode of the weight parameter corresponding to one filter of one layer is completed.

According to the above-described embodiment, by utilizing the internal memory of the FPGA, a high speed and low power consumption calculation can be realized, and the calculation result is highly reliable.

The present invention is not limited to the embodiments described above, but includes various modifications. For example, it is possible to replace a part of the configuration of one embodiment with the configuration of another embodiment, and it is possible to add a configuration of another embodiment to the configuration of another embodiment. Further, it is possible to add, delete, or replace a configuration of another embodiment to, from, or with a part of the configuration of each embodiment.

## Claims

1. A calculation system in which a neural network performing calculation using input data and a weight parameter is implemented in a calculation device including a calculation circuit and an internal memory and an external memory,
wherein the weight parameter is divided into two, i.e., a first weight parameter and a second weight parameter,
the first weight parameter is stored in the internal memory of the calculation device, and
the second weight parameter is stored in the external memory.

2. The calculation system according to claim 1, wherein the first weight parameter is a set of predetermined lower digits of the weight parameter whose absolute value is equal to or less than a predetermined threshold value, and
the second weight parameter is a set of part of the weight parameter other than the first weight parameter.

3. The calculation system according to claim 1, wherein the calculation circuit is constituted by an FPGA (Field-Programmable Gate Array),
the internal memory is an SRAM (Static Random Access Memory), and
the external memory is a memory superior to the SRAM in a soft error resistance.

4. The calculation system according to claim 1, wherein the calculation circuit is constituted by an FPGA (Field-Programmable Gate Array), and
the internal memory is at least one of a memory storing configuration data for setting the calculation circuit and a memory storing an intermediate result of calculation executed by the calculation circuit.

5. The calculation system according to claim 1, wherein the neural network includes at least one of a convolution layer and a full connection layer performing sum-of-products calculation, and
the weight parameter is data for performing the sum-of-products calculation on the input data.

6. A calculation system comprising:
an input unit receiving data;
a calculation circuit constituting a neural network performing processing on the data;
a storage area storing configuration data for setting the calculation circuit; and
an output unit for outputting a result of the processing,
wherein the neural network contains an intermediate layer that performs processing including inner product calculation, and
a portion of a weight parameter for the calculation of the inner product is stored in the storage area.

7. The calculation system according to claim 6, wherein a part of the weight parameter stored in the storage area is a set of predetermined lower bits among the weight parameters whose absolute value of parameter value is equal to or less than a predetermined threshold value.

8. The calculation system according to claim 6, wherein the calculation circuit is constituted by an FPGA (Field-Programmable Gate Array),
the storage area is constituted by an SRAM (Static Random Access Memory),
the calculation circuit and the storage area are embedded in a single chip semiconductor device.

9. The calculation system according to claim 8, wherein the one chip semiconductor device has a temporary storage area storing intermediate results of calculations executed in the calculation circuit,
a part of the weight parameter for calculating the inner product is further stored in the temporary storage area.

10. The calculation system according to claim 6, wherein the intermediate layer is a convolution layer or a full connection layer.

11. A calculation method of a neural network, wherein the neural network is implemented on a calculation system including a calculation device including a calculation circuit and an internal memory, an external memory, and a bus connecting the calculation device and the external memory, and
the calculation method of the neural network performs calculation using input data and a weight parameter with the neural network,
the calculation method comprising:
storing a first weight parameter, which is a part of the weight parameter, to the internal memory;
storing a second weight parameter, which is a part of the weight parameter, to the external memory;
reading the first weight parameter from the internal memory and reading the second weight parameter from the external memory when the calculation is performed; and
preparing the weight parameter required for the calculation in the calculation device and performing the calculation.

12. The calculation method of the neural network according to claim 11, wherein the second weight parameter is a set of at least a part of the weight parameter whose absolute value is equal to or less than a predetermined threshold value, and
the first weight parameter is a set of part of the weight parameter other than the second weight parameter.

13. The calculation method of the neural network according to claim 12, wherein the second weight parameter is a set of predetermined lower digits of the weight parameter whose absolute value is equal to or less than a predetermined threshold value,

14. The calculation method of the neural network according to claim 11, wherein the external memory stores the entire weight parameter including both of the first weight parameter and the second weight parameter, and
among them, a part corresponding to the first weight parameter is transferred to the internal memory.

15. The calculation method of the neural network according to claim 11, wherein the calculation circuit is constituted by an FPGA (Field-Programmable Gate Array),
the internal memory is constituted by an SRAM (Static Random Access Memory), and
the external memory is a semiconductor memory superior to the SRAM in a soft error resistance.
